# EUROPÄISCHE PATENTSCHRIFT

(11) **EP 2 183 300 B1**
(45) Veröffentlichungstag und Bekanntmachung des Hinweises auf die Patenterteilung: **28.12.2011**
(21) Anmeldenummer: 08787329.5
(22) Anmeldetag: 19.08.2008
(51) Int. Cl.: C08G 77/388, C08G 77/458, C08G 18/61

(54) **SILICONHALTIGE SCHAUMSTOFFE**
SILICONE-CONTAINING FOAMS
MOUSSES CONTENANT DE LA SILICONE

(30) Priorität: 29.08.2007 DE 102007040853
(43) Veröffentlichungstag der Anmeldung: 12.05.2010
(73) Patentinhaber: Wacker Chemie AG, 81737 München (DE)
(72) Erfinder: ZICHE, Wolfgang, 84489 Burghausen (DE); STANJEK, Volker, 84539 Ampfing (DE); WEIDNER, Richard, 84489 Burghausen (DE)
(74) Vertreter: Fritz, Helmut
(86) Internationale Anmeldenummer: PCT/EP2008/060848
(87) Internationale Veröffentlichungsnummer: WO 2009/027271

(56) Entgegenhaltungen:
- EP-A- 0 405 494
- EP-B- 1 421 129
- US-B2- 7 060 760

## Beschreibung

Die Erfindung betrifft eine verschäumbare Mischung, die ein organisch modifiziertes Organopolysiloxan enthält, Verfahren zur Herstellung des Organopolysiloxans und aus den verschäumbaren Mischungen herstellbare Schäume.

Sowohl reine Siliconschaumstoffe, als auch Polyurethan-Weichschäume, hergestellt aus organischen Polyolen und Di- oder Polyisocyanaten sind seit langem bekannt. Beide Stoffgruppen besitzen jedoch jeweils spezifische Vor- und Nachteile. So zeichnen sich Siliconschäume zwar in der Regel durch eine gute Hoch- und Tieftemperaturbeständigkeit sowie eine ausgezeichnete Flammfestigkeit aus, verfügen gleichzeitig allerdings auch über eine vergleichsweise hohe Dichte und ein nur sehr mäßiges mechanisches Eigenschaftsprofil. Polyurethan-Weichschäume hingegen besitzen meist eine hervorragende Mechanik. Ein Nachteil vieler Polyurethanschäume ist hingegen ein für viele Anwendungen unzureichendes Brandverhalten, welches - wenn überhaupt - nur durch große Mengen an zugesetzten Brandschutzmitteln ausgeglichen werden kann.

Durch den Einsatz von Silicon-Polyurethan-Copolymeren, d.h. von Polysiloxanen, die auch Polyurethan- und/oder Harnstoffeinheiten enthalten, ist es möglich, neuartige Schaumstoffe zu entwickeln, die neue und auf die jeweilige Anwendung genau zugeschnittene Kombinationen von Eigenschaften aufweisen. So lassen sich auf diese Weise insbesondere Schaumstoffe herstellen, die über eine gute Mechanik in Kombination mit einem gegenüber herkömmlichen Polyurethanschäumen deutlich verbesserten Brandverhalten verfügen.

In WO 03/080696 sind Siliconschaumstoffe beschrieben, die sich aus bestimmten hydroxyalkyl- und/oder aminoalkylfunktionellen Polysiloxanen mit Di- oder Polyisocyanaten herstellen lassen. Die Vernetzung der Silicone erfolgt dabei während der Schaumbildung. Als Treibmittel dient Wasser, das mit dem im Überschuss eingesetzten Isocyanaten unter Freisetzung von Kohlendioxid und der Bildung von Harnstoffeinheiten reagiert.

Dabei werden in WO 03/080696 zwei Verfahren zur Schaumherstellung beschrieben. Bei einem Verfahren wird das hydroxyalkyl- und/oder aminoalkylfunktionelle Siloxan zunächst mit Wasser emulgiert und die erhaltene Emulsion anschließend mit Di- oder Polyisocyanaten umgesetzt. Bei dem zweiten Verfahren wird das hydroxyalkyl- und/oder aminoalkylfunktionelle Siloxan zunächst mit einem Überschuss des Di- oder Polyisocyanates zu einem isocyanatfunktionellen Siloxan umgesetzt, welches dann in einem zweiten Reaktionsschritt mit Wasser vermischt und dabei verschäumt wird.

In DE 41 08 326 C1 sind Siliconschaumstoffe beschrieben, die sich durch eine Reaktion von hydroxyalkylfunktionellen Polysiloxanen mit Di- oder Polyisocyanaten herstellen lassen. Zur Herstellung der Siloxanschäume werden dabei vergleichbare Verfahren angewendet wie in WO 03/080696.

Die Umsetzung von hydroxyalkyl- oder aminoalkylterminierten Polysiloxanen mit Di- oder Polyisocyanaten ist zudem noch aus weiteren Literaturstellen bekannt, u.a. aus US 5512650 oder WO 97/40103. Allerdings wird diese Reaktion dabei nicht zur Herstellung von Schaumstoffen sondern ausschließlich zur Erzeugung von Elastomeren oder von Präpolymeren für Schmelzkleber- oder Dichtmassenanwendungen beschrieben. Auch sind die dort beschriebenen Verbindungen aufgrund ihrer hohen Molmassen und damit verbundenen sehr hohen Viskositäten nicht geeignet, um sie bei einem Verfahren zur Herstellung von Schaumstoffen aus Präpolymeren einzusetzen, bei dem die Vernetzung der Präpolymere erst während der Schaumbildung und bei niedrigen Temperaturen erfolgen soll.

Nachteilig bei allen Verfahren nach dem Stand der Technik sind die komplexe Handhabung mehrkomponentiger Systeme und die mit dem Isocyanatgehalt verbundene mögliche gesundheitliche Gefährdung, die durch spezielle Maßnahmen ausgeschlossen werden muss.

Aufgabe der Erfindung war die Entwicklung von Siloxan-Copolymerschäumen, die diesen Nachteil des Standes der Technik nicht aufweisen.

Gegenstand der Erfindung ist eine verschäumbare Mischung (M) enthaltend
A) organisch modifizierte Organopolysiloxane (S), die hergestellt werden aus
   A1) Organopolysiloxanen (S1) mit wenigstens einer Gruppe pro Molekül, die ausgewählt wird aus einer Aminoalkyl- und einer Hydroxyalkylgruppe,
   A2) Alkoxysilanen (V2) mit NCO-reaktiven Gruppen und
   A3) Polyisocyanaten (J) mit mindestens 2 Isocyanatgruppen pro Molekül
      und die pro Molekül im Mittel wenigstens eine Urethan- oder Harnstoffeinheit sowie eine Gruppe der allgemeinen Formel [1]

      -SiR¹_{z}(OR²)_{3-z} [1]

      aufweisen, in der
      - **R¹**: einen Alkyl-, Cycloalkyl-, Alkenyl- oder Arylrest mit 1-20 Kohlenstoffatomen,
      - **R²**: Wasserstoff, einen Alkylrest mit 1-10 Kohlenstoffatomen, bei dem bis zu 4 nicht benachbarte -CH₂- Gruppen durch eine -O Gruppe ersetzt sein können oder einen Acylrest mit 1-10 Kohlenstoffatomen und
      - **z**: die Werte 0, 1 oder 2 bedeuten, und
B) ein Treibmittel (T).

Die Mischungen (M) dienen zur Herstellung von Schäumen, bevorzugt Hart- oder Weichschäumen, insbesondere von Weichschäumen.

Die Polysiloxane (S) in der verschäumbaren Mischung (M) kondensieren in Gegenwart von (Luft-) Feuchtigkeit miteinander und härten gegebenenfalls mit Zusätzen zu festen, dreidimensional vernetzten Materialien mit guten Eigenschaften aus.

In einer bevorzugten Ausführungsform der Erfindung weisen die organisch modifizierten Organopolysiloxane (S) eine Gruppe der allgemeinen Formel [2] 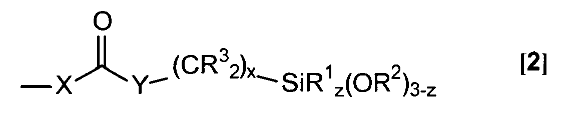 auf, in der
- **X und Y**: ein Sauerstoffatom, eine N-R⁴-Gruppe oder ein Schwefelatom,
- **R³**: Wasserstoff oder einen Alkyl-, Cycloalkyl-, Alkenyl- oder Arylrest mit 1-20 Kohlenstoffatomen,
- **R⁴**: ein Wasserstoffatom, einen Alkyl-, Alkenyl- oder Arylrest mit 1-10 Kohlenstoffatomen oder eine -CH₂-SiR¹_{z}(OR²)_{3-z}-Gruppe,
- **x**: eine ganze Zahl von 1 bis 8 darstellen und
- **R¹**, **R²** und **z**: die bei der allgemeinen Formel [1] angegebenen Bedeutungen aufweisen,
mit der Maßgabe, dass mindestens eine der beiden Gruppen **X** oder **Y** eine NH-Funktion darstellt.

Als Reste **R¹** werden Reste mit 1-8 Kohlenstoffatomen bevorzugt und Phenyl-, Methyl- oder Ethylgruppen besonders bevorzugt. Bei den Resten **R²** handelt es sich bevorzugt um Alkylreste mit 1-8 Kohlenstoffatomen, wobei Ethyl- oder Methylgruppen besonders bevorzugt werden, bei den Resten **R³** handelt es sich bevorzugt um Wasserstoff und als Reste **R⁴** werden Wasserstoff, Alkylreste mit 1-8 Kohlenstoffatomen, insbesondere Methyl-, Ethyl-, Propyl-, Cyclohexyl-, Cyclopentyl- und Phenylreste bevorzugt. **x** steht vorzugsweise für 1 oder 3, wobei ein Wert von 1 besonders bevorzugt wird. Für **z** werden Werte von 0 oder 1 bevorzugt.

Sofern organisch modifizierte Organopolysiloxane (S) mit Gruppen der allgemeinen Formel [2] vorliegen, in denen **R²** für eine Alkylgruppe und **x** für den Wert 1 stehen, handelt es sich um so genannte α-alkoxysilylterminierte Organopolysiloxane (S), bei denen die Alkoxysilylgruppe lediglich durch einen Methylenspacer von der benachbarten Urethan- oder Harnstoffeinheit getrennt ist. Diese α-Alkoxysilylgruppen weisen eine - im Vergleich zu herkömmlichen Alkoxysilylfunktionen ohne Methylenspacer - dramatisch erhöhte Reaktivität gegenüber (Luft-) Feuchtigkeit auf. Diese hohe Reaktivität macht die α-alkoxysilylterminierten Organopolysiloxane für einen Einsatz in den verschäumbaren Mischungen (M) besonders interessant, da diese Materialien nach ihrer Verschäumung besonders zügig aushärten, wodurch die Schaumstruktur fixiert und ein Schaum mit guter Schaumstruktur erhalten wird.

Die Polysiloxane (S) sind vorzugsweise linear oder verzweigt.

Bei den Treibmitteln (T) handelt es sich um Substanzen oder Substanzmischungen, die in der Lage sind, die Mischung (M) aufzuschäumen.

Dabei kann es sich um chemische Treibmittel handeln, die beim Schäumvorgang durch eine chemische Reaktion Gase freisetzen, durch die die Organopolysiloxane (S) verschäumt werden.

Bevorzugt handelt es sich bei den Treibmitteln (T) jedoch um physikalische Treibmittel, d.h. um unter Druck zu Flüssigkeiten komprimierte Gase, die beim Ausbringen der Mischung (M) aus einem Druckgebinde ganz oder teilweise verdampfen und dabei die Organopolysiloxane (S) verschäumen. Alternativ kann es sich auch um Flüssigkeiten handeln, die bei 0,10 MPa (abs.) und Temperaturen < 70°C, bevorzugt bei Temperaturen < 50°C besonders bevorzugt < 40°C verdampfen. In diesem Fall erfolgt die Schaumbildung bei entsprechend erhöhten Temperaturen, bei denen die Treibmittel verdampfen und die Schaumbildung treiben.

Besonders bevorzugte Treibmittel (T) sind dieselben bereits bei relativ geringen Drücken kondensierbaren Gase, die auch zur Herstellung herkömmlicher sprühbarer Montageschäume verwendet werden. Gängige Treibmittel sind beispielsweise Kohlenwasserstoffe mit jeweils 1-5, insbesondere 3-5 Kohlenstoffatomen wie Propan, Butan oder Cyclöpentan, Fluorkohlenwasserstoffe mit 1-3 Kohlenstoffatomen, wie 1,1-Difluorethan oder 1,1,1,2-Tetrafluorethan, Kohlendioxid oder Dimethylether sowie deren Mischungen.

Die Mischungen (M) enthalten vorzugsweise 0,5-60 Vol.-% Treibmittel, wobei Treibmittelmengen von 2-40 Vol.-% bevorzugt und Treibmittelmengen von 8-30 Vol.-% besonders bevorzugt werden.

Die Organopolysiloxane (S) und Treibmittel (T) enthaltenden, verschäumbaren Mischungen (M) enthalten zudem meist noch weitere Zusätze (Z), wie z. B. Schaumstabilisatoren, Katalysatoren, Füllstoffe, Thixotropiermittel, Verdünner, Lösungsmittel, Füllstoffe, weitere Polymere, Brandschutzmittel, UV-Absorber, Radikalfänger etc.

Gegebenenfalls kann als Komponente A4) ein Katalysator (K) bei der Herstellung anwesend sein.

Bei den NCO-reaktiven Gruppen der Alkoxysilane (V2) handelt es sich vorzugsweise um OH-, SH- oder N-R⁴-Gruppe, wobei R⁴ die bei der allgemeinen Formel [2] angegebene Bedeutung aufweist. Gruppen der Formel N-R⁴ werden dabei besonders bevorzugt.

Dabei wird das folgende Verfahren besonders bevorzugt: Die Organopolysiloxane (S1) werden - optional in Gegenwart eines Lösungsmittels (L) - mit einem Überschuss an Polyisocyanaten (J) mit mindestens 2 Isocyanatgruppen pro Molekül zu isocyanatfunktionellen Siloxanen umgesetzt. Dabei wird das Polyisocyanat vorzugsweise im Überschuss eingesetzt, wobei Überschüsse von 1,2 bis 10 Mol Isocyanateinheiten pro Mol Aminoalkyl- bzw. Hydroxyalkylgruppe der Organopolysiloxane (S1) bevorzugt und Überschüsse von 1,5 bis 3 Mol besonders bevorzugt werden. Bei diesem ersten Reaktionsschritt reagieren dann sämtliche Amino- und/oder Hydroxygruppen der Siloxane (S1) vollständig ab, wobei eine Mischung resultiert, die neben den isocyanatfunktionellen Siloxanen auch noch Anteile an nicht umgesetzten Polyisocyanaten (J) enthält. Dann erfolgt die Umsetzung der überschüssigen Isocyanatgruppen der isocyanatfunktionellen Siloxane und der nicht umgesetzten Polyisocyanate (J) mit Aminoalkylalkoxysilanen (V2) zu den alkoxysilylfunktionellen Organopolysiloxane (S). Beim letzten Reaktionsschritt werden bezüglich der überschüssigen Isocyanatgruppen vorzugsweise 0,9 bis 1,5-Moläquivalente an Aminoalkylalkoxysilanen (V2) eingesetzt. Sofern die Synthese in Gegenwart eines Lösungsmittels (L) durchgeführt wurde, kann dieses anschließend destillativ ganz oder teilweise entfernt werden.

Besonders bevorzugt ist zudem das folgende Vorgehen: Die Organopolysiloxane (S1) und die Aminoalkylalkoxysilane (V2) werden zunächst vermischt und anschließend - optional in Gegenwart eines Lösungsmittels (L) - gemeinsam mit den Polyisocyanaten (J) mit mindestens 2 Isocyanatgruppen pro Molekül zu den alkoxysilylfunktionellen Organopolysiloxanen (S) umgesetzt. Dabei werden die Mengen der Reaktionspartner vorzugsweise so gewählt, dass 0,9 bis 1,1 Mol NCO-Gruppen pro Mol NCO-reaktiver Gruppen eingesetzt werden. Anschließend kann das Lösungsmittel (L) destillativ ganz oder teilweise entfernt werden.

Auch diese Herstellverfahren können diskontinuierlich oder kontinuierlich betrieben werden. Bevorzugt werden kontinuierliche, lösungsmittelfreie Verfahren, die z. B. mit Extrudern durchgeführt werden können.

Die Treibmittel (T) sowie die oben erwähnten Zusätze (Z) können den Siloxanen (S) zu jedem Zeitpunkt vor, während oder nach ihrer Synthese zugegeben werden.

Die Organopolysiloxane (S1) sind vorzugsweise linear oder verzweigt. Als Organopolysiloxane (S1) werden bevorzugt Siloxane eingesetzt, deren Aminoalkyl- oder Hydroxyalkylgruppen der allgemeinen Formel [3]

-O-(SiR5R6)-R⁷-Z [3]

entsprechen, wobei
- **R⁵**: einen monovalenten, gegebenenfalls mit -CN oder Halogen substituierten C₁-C₁₂-Kohlenwasserstoffrest, in dem eine oder mehrere, einander nicht benachbarte Methyleneinheiten durch Gruppen -O- oder NR¹¹ ersetzt sein können, oder einen gegebenenfalls durch C₁-C₆-Alkylreste, -CN oder Halogen substituierten Phenylrest,
- **R⁶**: ein Wasserstoffatom oder einen Rest **R⁵**,
- **R⁷**: einen divalenten, gegebenenfalls cyano-, alkyl-, hydroxy-, amino-, aminoalkyl-, hydroxyalkyl- oder halogensubstituierten C₁-C₁₂-Kohlenwasserstoffrest, in dem eine oder mehrere, einander nicht benachbarte Methyleneinheiten durch Gruppen -O- oder NR¹² ersetzt sein können,
- **R¹¹**, **R¹²**: Wasserstoff oder einen Alkyl-, Cycloalkyl-, Alkenyl- oder Arylrest mit 1-20 Kohlenstoffatomen und
- **z**: eine Gruppe OH oder NH₂ darstellen.

Als Reste **R⁵** werden bevorzugt unverzweigte Alkylgruppen, vorzugsweise mit 1 bis 6 Kohlenstoffatomen, oder aromatische Kohlenwasserstoffe eingesetzt. Insbesondere Methylgruppen stellen besonders bevorzugte Reste **R⁵** dar. Reste **R⁶** sind vorzugsweise unsubstituiert. Bevorzugte Reste **R⁷** sind insbesondere lineare Alkylenketten mit 1 bis 6, vorzugsweise 1 oder 3 Kohlenstoffatomen oder cyclische Kohlenwasserstoffreste. Ebenfalls bevorzugte Reste **R⁷** sind zudem Alkylenketten mit 1 bis 10 Kohlenstoffatomen, vorzugsweise 3 oder 5 Kohlenstoffatomen, deren Kohlenstoffkette durch eine oder mehrere Sauerstoffatome oder eine Gruppe **NR⁸** unterbrochen ist. Als Reste **R⁸** bevorzugt werden Wasserstoff, Alkylgruppen, Arylgruppen, Aminoalkylgruppen oder Hydroxyalkylgruppen, vorzugsweise mit jeweils 1 bis 6 Kohlenstoffatomen, wobei Wasserstoff und Methylgruppen besonders bevorzugt werden. Bei der Gruppe **Z** handelt es sich besonders bevorzugt um eine Aminfunktion.

Bevorzugt werden verzweigte oder unverzweigte Organopolysiloxane (S1) eingesetzt, deren Kettenenden zu mindestens 90 %, insbesondere zu mindestens 95 % mit Aminoalkyl- oder Hydroxyalkylgruppen der allgemeinen Formel [3] endterminiert sind. An einem Organopolysiloxanmolekül (S1) können gegebenenfalls sowohl Aminoalkyl- als auch Hydroxyalkylgruppen der allgemeinen Formel [3] vorhanden sein.

Besonders bevorzugt werden Organopolysiloxane (S1) eingesetzt, die entweder ausschließlich oder zu mindestens 50 Gew.-%, bevorzugt zu mindestens 70 Gew.-%, besonders bevorzugt zu mindestens 90 Gew.-% aus linearen Siloxanen der allgemeinen Formel [4]

Z-R⁷-[-SiR⁵R⁶O-]ₘ-SiR⁵R⁶-R⁷-Z [4]

bestehen, wobei
- **m**: eine ganze Zahl darstellt, wobei der Mittelwert von **m** von 1 bis 10000 beträgt, und
- **R⁵**, **R⁶**, **R⁷** und **Z**: die vorstehenden Bedeutungen aufweisen.

Bevorzugte Mittelwerte für **m** sind 10 bis 2000, wobei Mittelwerte von 15 bis 1000, insbesondere von 30 bis 800 besonders bevorzugt werden.

In einer bevorzugten Ausführungsform der Erfindung werden die Siloxane (S1) der allgemeinen Formel [4] mit weiteren Siloxanen (S1) gemischt, die im Mittel mehr als zwei Gruppen aufweisen, die ausgewählt werden aus Aminoalkyl- und Hydroxyalkylfunktionen. Dabei kann es sich sowohl um verzweigte und mit Gruppen, die ausgewählt werden aus Aminoalkyl- und Hydroxyalkylfunktionen terminierte Siloxane (S1) oder auch um unverzweigte Siloxane mit lateralen Gruppen, die ausgewählt werden aus Aminoalkyl- und Hydroxyalkylfunktionen handeln.

Bei einem besonders bevorzugten Verfahren werden die linearen Organopolysiloxane (S1) der allgemeinen Formel [4] aus Organopolysiloxanen der allgemeinen Formel [5]

H-O[-SiR⁵₂O]m-H [5],

und Organosiliciumverbindungen der allgemeinen Formeln [6] bis [8] 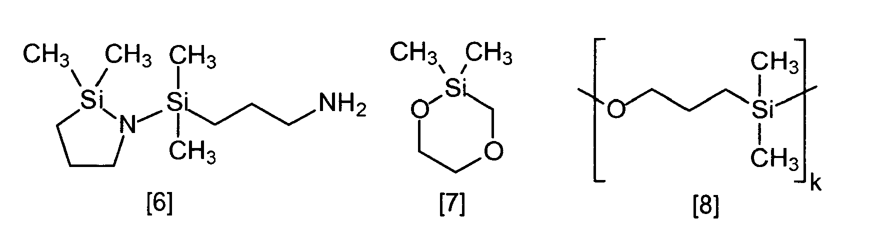 hergestellt, wobei
- **k**: eine ganze Zahl von mindestens 2 bedeutet und
- **R⁵** und **m**: die vorstehenden Bedeutungen aufweisen.

In einer Ausführungsform der Erfindung werden als Komponente (S1) Siloxane eingesetzt, die zusätzlich zu den Amino- und/oder Hydroxyalkylfunktionen auch noch über Phosphonatoalkylfunktionen der Formel [9]

-R⁹⁻P(O)(OR¹⁰)₂ [9]

verfügen, wobei **R⁹** die Bedeutungen von **R⁷** und **R¹⁰** die Bedeutungen von **R⁵** aufweisen. Die Phosphatfunktionen können dabei die Adhäsion der Schäume an Metalloberflächen verbessern.

Die im erfindungsgemäßen Verfahren eingesetzten Siloxane (S1) weisen bevorzugt einen möglichst geringen Anteil an nicht gegenüber Isocyanaten reaktiven Siloxanen auf. Insbesondere weisen sie bevorzugt einen möglichst niedrigen Anteil an nicht isocyanatreaktiven cyclischen Siloxanen auf. So können nicht reaktive Siloxane gegebenenfalls eine entschäumende Wirkung besitzen und somit die Schaumstruktur der ausgehärteten Schäume verschlechtern. Gegebenenfalls kann es vorteilhaft sein, nicht isocyanatreaktive Siloxancyclen destillativ aus den Siloxanen (S1) zu entfernen, bevor diese im Verfahren eingesetzt werden.

Als Polyisocyanate (J) können sämtliche bekannten Di- oder Polyisocyanate eingesetzt werden. Bevorzugt werden Polyisocyanate (J) der allgemeinen Formel [10]

Q(NCO)ₙ [10],

eingesetzt, wobei
- **Q**: einen n-funktionellen aromatischen oder aliphatischen Kohlenwasserstoffrest und
- **n**: eine ganze Zahl von mindestens 2 bedeuten.

Vorzugsweise weist **Q** 4 bis 30 Kohlenstoffatome auf. Vorzugsweise bedeutet **n** eine ganze Zahl von höchstens 5. Beispiele für gebräuchliche Diisocyanate (J) sind Diisocyanatodiphenylmethan (MDI), sowohl in Form von rohem oder technischem MDI als auch in Form reiner 4,4' bzw. 2,4' Isomeren oder deren Zubereitungen, Tolylendiisocyanat (TDI) in Form seiner verschiedenen Regioisomere, Diisocyanatonaphthalin (NDI), Isophorondiisocyanat (IPDI), 1,3-Bis(1-isocyanato-1-methylethyl)benzol (TMXDI), 4,4'-Methylendicyclohexylendiisocyanat (H-MDI) oder auch von Hexamethylendiisocyanat (HDI). Beispiele für Polyisocyanate (J) sind polymeres MDI (p-MDI), Triphenylmethantriisocyanat oder Biuret- oder Isocyanurattrimerisate der oben genannten Isocyanate. Die Di- und/oder Polyisocyanate (J) können allein oder im Gemisch eingesetzt werden.

Als Alkoxysilane (V1) bzw. (V2) werden vorzugsweise Silane der allgemeinen Formeln [11] bzw. [12] 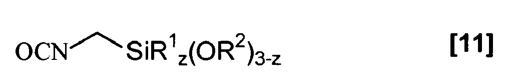 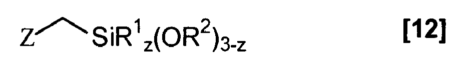 eingesetzt, wobei
- **Z**: eine OH-, SH- oder eine NHR¹³-Gruppe und
- **R¹³**: Wasserstoff oder einen Alkyl-, Cycloalkyl-, Alkenyl- oder Arylrest mit 1-20 Kohlenstoffatomen bedeuten und
- **R¹**, **R²**, **Z** und **z**: die oben angegebenen Bedeutungen besitzen.

Bei der Herstellung der Organosiloxane (S) können neben den Siloxanen (S1), den Aminoalkylalkoxysilanen (V1) bzw. (V2) und den Polyisocyanaten (J) auch noch weitere Komponenten mit Isocyanatfunktionen und/oder isocyanatreaktiven Gruppen eingesetzt und mit in die Organosiloxane (S) eingebaut werden. Beispielhaft genannt seien hier Monoisocyanate, isocyanatfunktionelle organische Oligomere oder (Prä-)Polymere, monomere Alkohole, monomere Diole, wie Glycol, Propandiol, Butandiol, monomere Oligoole, wie Pentaerythrit oder Trihydroxymethylethan, oligomere oder polymere Alkohole mit einer, zwei oder mehreren Hydroxylgruppen, wie Polyethylen- oder Polypropylenoxide, Wasser, monomere Amine mit einer, zwei oder mehreren Aminfunktionen, wie Ethylendiamin, Hexamethylendiamin sowie auch oligomere oder polymere Amine mit einer, zwei oder mehreren Aminfunktionen. Der Gewichtsanteil dieser zusätzlichen Verbindungen liegt typischerweise unter 30 Gew.-%, bevorzugt unter 15 Gew.-% und besonders bevorzugt unter 5 Gew.-%, bezogen auf die isocyanatfunktionellen Organosiloxane (S1).

Die Herstellung der Siloxane (S) kann durch den Einsatz von Katalysatoren (K) beschleunigt werden. Als Katalysatoren (K) werden vorzugsweise saure oder basische Verbindungen verwendet, z. B. teilveresterte Phosphorsäuren, Carbonsäuren, teilveresterte Carbonsäuren, Alkylammoniumhydroxide, Ammoniumalkoxide, Alkylammoniumfluoride oder Aminbasen, Organo-Zinnverbindungen, Organo-Zinkverbindungen, Organo-Wismutverbindungen, Organo-Titanverbindungen oder Mischungen dieser Katalysatoren. Gegebenenfalls werden die verwendeten Katalysatoren (K) nach der Beendigung der Reaktion deaktiviert, z. B. durch Zugabe von Katalysatorgiften oder - bei sauren oder basischen Katalysatoren (K) - durch Neutralisation. Durch diese Deaktivierung kann die Lagerstabilität der Siloxane (S) bzw. der diese enthaltenden Mischungen (M) verbessert werden. Wie beschrieben, können verschäumbaren Mischungen (M) weitere Zusätze (Z) enthalten. Einen bevorzugten Zusatz stellen dabei Füllstoffe (F) dar. Hier können sämtliche nicht verstärkende Füllstoffe, also Füllstoffe mit einer BET-Oberfläche von bis zu 50 m²/g, wie Kreide oder verstärkende Füllstoffe, also Füllstoffe mit einer BET-Oberfläche von mindestens 50 m²/g, wie Ruß, gefällte Kieselsäure oder pyrogene Kieselsäure, eingesetzt werden. Insbesondere hydrophobe wie auch hydrophile pyrogene Kieselsäuren stellen dabei einen bevorzugten Füllstoff dar. In einer besonders bevorzugten Ausführungsform der Erfindung wird eine pyrogene Kieselsäure eingesetzt, deren Oberfläche mit Hydroxyalkyl- oder insbesondere mit Aminoalkylfunktionen modifiziert worden ist. Diese modifizierte Kieselsäure kann chemisch mit in das Schaumpolymer eingebaut werden. Die Füllstoffe (F) können dabei verschiedene Funktionen wahrnehmen. So können sie zur Einstellung der Viskosität der schäumbaren Mischung (M) verwendet werden. Vor allem aber können sie während der Verschäumung eine "Stützfunktion" wahrnehmen und so zu Schäumen mit besserer Schaumstruktur führen. Schließlich können auch die mechanischen Eigenschaften der resultierenden Schäume durch den Einsatz von Füllstoffen (F) entscheidend verbessert werden.

Des Weiteren können die schäumbaren Mischungen (M) auch Katalysatoren (K2) enthalten, die die Silankondensationsreaktion und damit die Schaumhärtung beschleunigen. Als Katalysatoren (K2) sind u.a. Organozinnverbindungen geeignet. Beispiele sind Dibutylzinndilaurat, Dioctylzinndilaurat, Dibutylzinndiacetat, Dibutylzinndioctoat oder Dibutylzinn-bis-(dodecylmercaptid). Zudem kommen auch zinnfreie Katalysatoren (K2), z. B. organische Titanate, Eisenkatalysatoren, wie organische Eisenverbindungen, organische und anorganische Schwermetallverbindungen oder Amine in Frage. Als Beispiel für eine organische Eisenverbindung sei Eisen(III)acetylacetonat genannt. Beispiele für Amine sind Triethylamin, Tributylamin, 1,4-Diazabicyclo[2,2,2]octan, N,N-Bis-(N,N-dimethyl-2-aminoethyl)-methylamin, N,N-Dimethylcyclohexylamin, N,N-Dimethylphenlyamin, Bis-N,N-dimethylaminoethylether, N,N-Dimethyl-2-aminoethanol, N,N-Dimethylaminopyridin, N,N,N,N-Tetramethyl-bis-(2-Aminoethylmethylamin, 1,5-Diazabicyclo[4.3.0]non-5-en, 1,8-Diazabicyclo[5.4.0]undec-7-en, N-Ethylmorpholin oder N,N'-Dimethylaminopyridin.

Die Katalysatoren (K2) können einzeln oder als Gemisch eingesetzt werden. Gegebenenfalls können die bei der Herstellung der Siloxane (S) eingesetzten Katalysatoren (K) gleichzeitig auch als Katalysatoren (K2) zur Schaumhärtung dienen.

Bezogen auf die schäumbare Mischung (M) wird der Katalysator (K2) bevorzugt in einer Menge von 0,03 - 6,0 Gew.-%, besonders bevorzugt in einer Menge von 0,1 - 4,0 Gew.-% eingesetzt.

In vielen Fällen ist es von Vorteil, den schäumbaren Mischungen (M) Schaumstabilisatoren (ST) zuzugeben. Als geeignete Schaumstabilisatoren (ST) können beispielsweise die handelsüblichen, durch Polyetherseitenketten modifizierten Siliconoligomere oder Fluortenside, wie Zonyl®-Typen (DuPont), eingesetzt werden. Die Schaumstabilisatoren werden in Mengen von bis zu 6 Gew.-%, vorzugsweise von 0,1 bis 3 Gew.-%, jeweils bezogen auf die schäumbaren Mischungen (M), eingesetzt.

Weiterhin kann auch der Zusatz von Zellregulantien, Thixotropiermitteln und/oder Weichmachern vorteilhaft sein. Zur weiteren Verbesserung der Brandbeständigkeit können den schäumbaren Mischungen (M) zudem Flammschutzmittel zugesetzt werden, beispielsweise phosphorhaltige Verbindungen, vor allem Phosphate (z. B. Triethylphosphat, Tris-chlorproyl-phosphat etc.) und Phosphonate, sowie auch halogenierte Polyester und Polyole oder Chlorparaffine.

Die Organopolysiloxane (S) bzw. die diese enthaltenden schäumbaren Mischungen (M) werden bevorzugt zur Herstellung von Siloxan-Polyurethan-Copolymerschäumen bzw. Siloxan-Polyharnstoff-Copolymerschäumen eingesetzt. Dabei werden die Siloxane (S) bzw. schäumbaren Mischungen (M) in Form 1-komponentiger Systeme eingesetzt. Die Schaumbildung erfolgt dabei durch das physikalische Treibmittel (T). Nach dem Aufbringen des Schaumes härtet dieser durch eine Reaktion mit der Luftfeuchtigkeit aus.

Alle vorstehenden Symbole der vorstehenden Formeln weisen ihre Bedeutungen jeweils unabhängig voneinander auf. In allen Formeln ist das Siliciumatom vierwertig.

Soweit nicht anders angegeben, sind alle Mengen- und Prozentangaben auf das Gewicht bezogen, alle Drücke 0,10 MPa (abs.) und alle Temperaturen 20°C.

### Beispiele

### Beispiel 1:

200 g eines linearen Organopolysiloxans der Formel H₂N-(CH₂)₃-[(CH₃₎2-SiO]₁₂₉Si(CH₃)2-(CH₂)3-NH₂ und 44,9 g Phenylaminomethyltrimethoxysilan wurden in 50 ml absolutem Tetrahydrofuran (THF) mit 20,62 g Toluoldiisocyanat (TDI) innerhalb von 30 Min. umgesetzt, dabei wurde portionsweise insgesamt 250 g THF zugegeben und auf 50°C erwärmt. Die so erhaltene Lösung wurde im Vakuum vom Lösungsmittel befreit.

### Beispiel 2:

55,13 g des Präpolymers von Beispiel 1 und 0,5 g DBTL wurden in ein Druckglas mit Ventil gegeben und 20 ml Dimethylether (DME) eingefüllt. Zur Homogenisierung wurde 12 h geschüttelt. Das Gemisch ließ sich zu einem nicht zerfließenden, sofort klebfreiem Schaumstrang verarbeiten, der eine gute Stabilität und Reißfestigkeit aufwies. Die Porengrößen waren gleichmäßig.

### Beispiel 3:

200 g eines linearen Organopolysiloxans der Formel H₂N-(CH₂)₃-[(CH₃)₂-SiO]₁₂₉Si(CH₃)₂-(CH₂)₃-NH₂ wurden in einem Gemisch aus 12,5 g Methylethylketon (MEK) und 250 g THF mit 20,62 g Toluoldiisocyanat (TDI) innerhalb von 30 Min. umgesetzt, dabei stieg die Temperatur auf 34°C. Danach wurden 44,9 g Phenylaminomethyltrimethoxysilan zugegeben. Die viskose Lösung ist noch rührbar. Anschließend wird THF/MEK bei 300 mbar entfernt.

### Beispiel 4:

50,3 g des Präpolymers von Beispiel 3 und 0,5 g DBTL wurden in ein Druckglas mit Ventil gegeben und 10 ml Dimethylether (DME) und 10 ml eines 1:2-Gemisches Propan/Butan eingefüllt. Zur Homogenisierung wird 12 h geschüttelt. Das Gemisch ließ sich zu einem nicht zerfließenden Schaum versprühen, der eine Hautbildungszeit von weniger als einer Minute besaß. Der vulkanisierte Schaum hatte eine gute Stabilität und Reißfestigkeit. Die Porengrößen waren gleichmäßig.

### Beispiel 5:

200 g eines linearen Organopolysiloxans der Formel H₂N-(CH₂)₃-[(CH₃)₂-SiO]₂₀₀Si(CH₃)₂-(CH₂)₃-NH₂ und 44,9 g Phenylaminomethyltrimethoxysilan wurden in einem Gemisch aus 12,5 g Methylethylketon (MEK) und 250 g THF mit 20,62 g Toluoldiisocyanat (TDI) innerhalb von 30 Min. umgesetzt, dabei stieg die Temperatur auf 34°C. Die viskose Lösung war noch rührbar. Anschließend wurde THF/MEK bei 300 mbar entfernt und ein zähes gummiartiges Material erhalten.

### Beispiel 6:

50,3 g des Präpolymers von Beispiel 5 und 0,5 g DBTL wurden in ein Druckglas mit Ventil gegeben und 25 ml Dimethylether (DME) eingefüllt. Zur Homogenisierung wurde 12 h geschüttelt. Das Gemisch ließ sich zu einem nicht zerfließenden Schaum versprühen, der eine Hautbildungszeit von weniger als einer Minute besaß. Der vulkanisierte Schaum hat eine gute Stabilität und Reißfestigkeit. Die Porengrößen waren gleichmäßig.

### Beispiel 7:

1173 g eines linearen Organopolysiloxans der Formel H₂N-(CH₂)₃-[(CH₃)₂-SiO]₆₂₀Si(CH₃)₂-(CH₂)₃-NH₂ wurde mit 10,21 g H₂N-(CH₂)₃-[(CH₃)₂-Si-cyclo(N-(CH₂)₃-[(CH₃)₂-Si) zu einem linearen Organopolysiloxan der Formel H₂N-(CH₂)3-[(CH₃)₂-SiO]₆₂₀Si(CH₃)₂-(CH₂)₃-NH₂ umgesetzt. 200 g dieses linearen Organopolysiloxans der Formel H₂N-(CH₂)3-[(CH₃)₂-SiO]₆₂₀Si(CH₃)₂-(CH₂)₃-NH₂ und 18 g Phenylaminomethyltrimethoxysilan wurden in 300 g THF mit 8,3 g Toluoldiisocyanat (TDI) innerhalb von 30 Min. umgesetzt, dabei wurden portionsweise insgesamt noch 100 g THF zugegeben, die Temperatur stieg auf 34°C. Die viskose Lösung war noch rührbar. Anschließend wurde THF bei 300 mbar entfernt und ein zähes gummiartiges Material erhalten.

### Beispiel 8:

50,0 g des Präpolymers von Beispiel 7 und 0,25 g DBTL wurden in ein Druckglas mit Ventil gegeben und 20 ml Dimethylether (DME) und 30 ml einer 1:1-Mischung Propan/Butan eingefüllt. Zur Homogenisierung wurde 12 h geschüttelt. Das Gemisch ließ sich zu einem nicht zerfließenden Schaum versprühen, der eine Hautbildungszeit von weniger als einer Minute besaß. Der vulkanisierte Schaum hat eine gute Stabilität und Reißfestigkeit. Die Porengrößen waren gleichmäßig.

### Beispiel 9:

200 g eines linearen Organopolysiloxans der Formel HO-(CH₂)₂-O-CH₂-[(CH₃)₂-SiO]₆₂₀Si(CH₃)₂-CH₂-O-(CH₂)₂-OH wurde mit 8,3 g Toluoldiisocyanat (TDI) 40 mg Borchi® Kat 0244 (Borchers GmbH) in 300 g THF 1 h zum Rückfluss erhitzt. Die Mischung wurde dann mit 18 g Phenylaminomethyltrimethoxysilan innerhalb von 30 Min. umgesetzt, dabei wurden portionsweise insgesamt noch 100 g THF zugegeben. Die viskose Lösung war noch rührbar. Anschließend wurde THF bei 300 mbar entfernt und ein zähes gummiartiges Material erhalten.

### Beispiel 10:

50,0 g des Präpolymers von Beispiel 9 und 0,25 g DBTL wurden in ein Druckglas mit Ventil gegeben und 15 ml Dimethylether (DME) und 35 ml einer 1:1-Mischung Propan/Butan eingefüllt. Zur Homogenisierung wurde 12 h geschüttelt. Das Gemisch ließ sich zu einem nicht zerfließenden Schaum versprühen, der eine Hautbildungszeit von weniger als einer Minute besaß. Der vulkanisierte Schaum hat eine gute Stabilität und Reißfestigkeit. Die Porengrößen waren gleichmäßig.

## Patentansprüche

1. Verschäumbare Mischung (M), enthaltend
A) organisch modifizierte Organopolysiloxane (S), die hergestellt werden aus
A1) Organopolysiloxanen (S1) mit wenigstens einer Gruppe pro Molekül, die ausgewählt wird aus einer Aminoalkyl- und einer Hydroxyalkylgruppe,
A2) Alkoxysilanen (V2) mit NCO-reaktiven Gruppen und
A3) Polyisocyanaten (J) mit mindestens 2 Isocyanatgruppen pro Molekül
und die pro Molekül im Mittel wenigstens eine Urethan- oder Harnstoffeinheit sowie eine Gruppe der allgemeinen Formel [1]
-SiR¹_{z}(O^{R}2)_{3-z} [1]
aufweisen, in der
**R¹** einen Alkyl-, Cycloalkyl-, Alkenyl- oder Arylrest mit 1-20 Kohlenstoffatomen,
**R²** Wasserstoff, einen Alkylrest mit 1-10 Kohlenstoffatomen, bei dem bis zu 4 nicht benachbarte -CH₂- Gruppen durch eine -O- Gruppe ersetzt sein können oder einen Acylrest mit 1-10 Kohlenstoffatomen und
**z** die Werte 0, 1 oder 2 bedeuten, und
B) ein Treibmittel (T).

2. Verschäumbare Mischung (M) nach Anspruch 1, bei der die organisch modifizierten Organopolysiloxane (S) eine Gruppe der allgemeinen Formel [2] 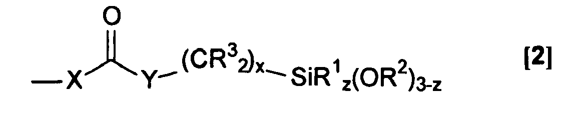 aufweisen, in der
**X** und **Y** ein Sauerstoffatom, eine N-R⁴-Gruppe oder ein Schwefelatom,
**R³** Wasserstoff oder einen Alkyl-, Cycloalkyl-, Alkenyl- oder Arylrest mit 1-20 Kohlenstoffatomen,
**R⁴** ein Wasserstoffatom, einen Alkyl-, Alkenyl- oder Arylrest mit 1-10 Kohlenstoffatomen oder eine -CH₂-SiR¹_{z}(OR²)_{3-z}-Gruppe,
**x** eine ganze Zahl von 1 bis 8 darstellen und
**R¹**, **R²** und **z** die bei der allgemeinen Formel [1] angegebenen Bedeutungen aufweisen, mit der Maßgabe, dass mindestens eine der beiden Gruppen **X** oder **Y** eine NH-Funktion darstellt.

3. Verfahren zur Herstellung von Organopolysiloxanen (S) gemäß Anspruch 1, wobei
in einem ersten Schritt die Organopolysiloxane (S1) mit einem Überschuss an Polyisocyanaten (J) mit mindestens 2 Isocyanatgruppen pro Molekül zu isocyanatfunktionellen Siloxanen umgesetzt werden und
in einem zweiten Schritt die überschüssigen Isocyanatgruppen der isocyanatfunktionellen Siloxane mit Aminoalkylalkoxysilanen (V2) zu den alkoxysilylfunktionellen Organopolysiloxane (S) umgesetzt werden.

4. Verfahren zur Herstellung von Organopolysiloxanen (S) gemäß Anspruch 1, wobei
in einem ersten Schritt die Organopolysiloxane (S1) und die Aminoalkylalkoxysilane (V2) vermischt werden und
in einem zweiten Schritt die Mischung mit den Polyisocyanaten (J) mit mindestens 2 Isocyanatgruppen pro Molekül zu den alkoxysilylfunktionellen Organopolysiloxanen (S) umgesetzt werden.

5. Verschäumbare Mischung (M) nach Anspruch 1 oder 2, oder Verfahren nach Anspruch 3 oder 4, wobei Organopolysiloxane (S1) eingesetzt werden, deren Aminoalkyl- oder Hydroxyalkylgruppen der allgemeinen Formel [3]
-O-(SiR⁵R⁶)-R⁷-z [3]
entsprechen, wobei
**R⁵** einen monovalenten, gegebenenfalls mit -CN, oder Halogen substituierten C₁-C₁₂-Kohlenwasserstoffrest, in dem eine oder mehrere, einander nicht benachbarte Methyleneinheiten durch Gruppen -O- oder NR¹¹ ersetzt sein können, oder einen gegebenenfalls durch C₁-C₆-Alkylreste, -CN oder Halogen substituierten Phenylrest,
**R⁶** ein Wasserstoffatom oder einen Rest **R⁵**,
**R⁷** einen divalenten, gegebenenfalls cyano-, alkyl-, hydroxy-, amino-, aminoalkyl-, hydroxyalkyl- oder halogensubstituierten C₁-C₁₂-Kohlenwasserstoffrest, in dem eine oder mehrere, einander nicht benachbarte Methyleneinheiten durch Gruppen -O- oder NR¹² ersetzt sein können,
**R¹¹**, **R¹²** Wasserstoff oder einen Alkyl-, Cycloalkyl-, Alkenyl- oder Arylrest mit 1-20 Kohlenstoffatomen und
**Z** eine Gruppe OH oder NH₂ darstellen.

6. Verschäumbare Mischung (M) nach Anspruch 1 oder 2, bei der das Treibmittel (T) ein physikalisches Treibmittel ist, welches ausgewählt wird aus unter Druck zu Flüssigkeiten komprimierten Gasen und Flüssigkeiten, die bei 0,10 MPa (abs.) und Temperaturen < 70°C verdampfen.

7. Schäume, herstellbar aus den verschäumbaren Mischungen gemäß Anspruch 1, 2, 5 oder 6.

## Claims

1. Foamable mixture (M) comprising
A) organically modified organopolysiloxanes (S) which are prepared from
A1) organopolysiloxanes (S1) having at least one group selected from among an aminoalkyl group and a hydroxyalkyl group per molecule,
A2) alkoxysilanes (V2) having NCO-reactive groups and
A3) polyisocyanates (J) having at least 2 isocyanate groups per molecule and which on average have at least one urethane or urea unit and also a group of the general formula [1]
-SiR¹_{z}(OR²)_{3-z} [1]
where
**R¹** is an alkyl, cycloalkyl, alkenyl or aryl radical having 1-20 carbon atoms,
**R²** is hydrogen, an alkyl radical which has 1-10 carbon atoms and in which up to 4 nonadjacent -CH₂- groups can be replaced by an -O- group or an acyl radical having 1-10 carbon atoms and
**z** is 0, 1 or 2, per molecule and
B) a blowing agent (T).

2. Foamable mixture (M) according to Claim 1, wherein the organically modified organopolysiloxanes (S) have a group of the general formula [2] 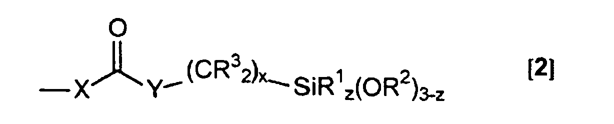 where
**X and Y** are each an oxygen atom, an N-R⁴ group or a sulfur atom,
**R³** is hydrogen or an alkyl, cycloalkyl, alkenyl or aryl radical having 1-20 carbon atoms,
**R⁴** is a hydrogen atom, an alkyl, alkenyl or aryl radical having 1-10 carbon atoms or a -CH₂-SiR¹_{z}(OR²)_{3-z} group,
**x** is an integer from 1 to 8 and
**R¹**, **R²** and **z** are as defined for the general formula [1], with the proviso that at least one of the two groups **X** or **Y** is an NH function.

3. Process for preparing organopolysiloxanes (S) according to Claim 1, which comprises,
in a first step, reacting the organopolysiloxanes (S1) with an excess of polyisocyanates (J) having at least 2 isocyanate groups per molecule to form isocyanate-functional siloxanes and,
in a second step, reacting the excess isocyanate groups of the isocyanate-functional siloxanes with aminoalkylalkoxysilanes (V2) to form the alkoxysilyl-functional organopolysiloxanes (S).

4. Process for preparing organopolysiloxanes (S) according to Claim 1, which comprises,
in a first step, mixing the organopolysiloxanes (S1) and the aminoalkylalkoxysilanes (V2) and,
in a second step, reacting the mixture with the polyisocyanates (J) having at least 2 isocyanate groups per molecule to form the alkoxysilyl-functional organopolysiloxanes (S).

5. Foamable mixture (M) according to Claim 1 or 2, or process according to Claim 3 or 4, wherein organopolysiloxanes (S1) whose aminoalkyl or hydroxyalkyl groups have the general formula [3]
-O-(SiR⁵R⁶)-R⁷-z [3]
where
**R⁵** is a monovalent C₁-C₁₂-hydrocarbon radical which may be substituted by -CN or halogen and in which one or more, nonadjacent methylene units may be replaced by -O- or NR¹¹ groups, or a phenyl radical which may be substituted by C₁-C₆-alkyl radicals, -CN or halogen,
**R⁶** is a hydrogen atom or a radical **R⁵**,
**R⁷** is a divalent, optionally cyano-, alkyl-, hydroxy-, amino-, aminoalkyl-, hydroxyalkyl- or halogen-substituted C₁-C₁₂-hydrocarbon radical in which one or more, nonadjacent methylene units may be replaced by -O- or NR¹² groups,
**R¹¹**, **R¹²** are each hydrogen or an alkyl, cycloalkyl, alkenyl or aryl radical having 1-20 carbon atoms, and
**Z** is an OH or NH₂ group,
are used.

6. Foamable mixture (M) according to Claim 1 or 2, wherein the blowing agent (T) is a physical blowing agent selected from among gases compressed under superatmospheric pressure to form liquids and liquids which vaporize at 0.10 MPa (abs.) and temperatures of < 70°C.

7. Foams which can be produced from the foamable mixtures according to Claim 1, 2, 5 or 6.

## Revendications

1. Mélange transformable en mousse (M), contenant
A) des organopolysiloxanes (S) à modification organique,
qui sont préparés à partir
A1) d'organopolysiloxanes (S1) comportant par molécule au moins un groupe qui est choisi parmi un groupe aminoalkyle et un groupe hydroxyalkyle,
A2) d'alcoxysilanes (V2) comportant des groupes réactifs avec NCO et
A3) de polyisocyanates (J) comportant au moins 2 groupes isocyanate par molécule
et qui comportent par molécule en moyenne au moins une unité uréthane ou urée ainsi qu'un groupe de formule générale [1]
-SiR¹_{z}(OR)_{3-z} [1]
dans laquelle
**R¹** représente un radical alkyle, cycloalkyle, alcényle ou aryle ayant de 1 à 20 atomes de carbone,
**R²** représente un atome d'hydrogène, un radial alkyle ayant 1-10 atomes de carbone, dans lequel jusqu'à 4 groupes -CH₂- non contigus peuvent être remplacés par un groupe -O- ou représente un radical acyle ayant 1-10 atomes de carbone et
**z** représente les valeurs 0, 1 ou 2, et
B) un agent d'expansion (T).

2. Mélange transformable en mousse (M) selon la revendication 1, dans lequel les organopolysiloxanes (S) à modification organique comportent un groupe de formule générale [2] 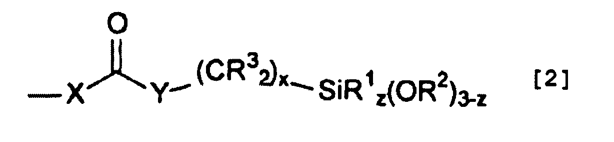 dans laquelle
**X** et **Y** représentent un atome d'oxygène, un groupe N-R⁴ ou un atome de soufre,
**R³** représente un atome d'hydrogène ou un radical alkyle, cycloalkyle, alcényle ou aryle ayant 1-20 atomes de carbone,
**R⁴** représente un atome d'hydrogène, un radical alkyle, alcényle ou aryle ayant 1-10 atomes de carbone ou un groupe -CH₂-SiR¹_{z}(OR²)_{3-z},
**x** représente un nombre entier valant de 1 à 8 et
**R¹**, **R²** et **z** ont les significations indiquées dans la formule générale [1],
étant entendu qu'au moins un des deux groupes **X** ou **Y** représente une fonction NH.

3. Procédé pour la préparation d'organopolysiloxanes (S) selon la revendication 1, dans lequel dans une première étape on fait réagir les organopolysiloxanes (S1) avec un excès de polyisocyanates (J) comportant au moins 2 groupes isocyanate par molécule, pour aboutir à des siloxanes à fonction isocyanate et
dans une deuxième étape on fait réagir les groupes isocyanate en excès des siloxanes à fonction isocyanate avec des aminoalkylalcoxysilanes (V2) pour aboutir aux organopolysiloxanes (S) à fonction alcoxysilyle.

4. Procédé pour la préparation d'organopolysiloxanes (S) selon la revendication 1, dans lequel dans une première étape on mélange les organopolysiloxanes (S1) et les aminoalkylalcoxysilanes (V2) et
dans une deuxième étape on fait réagir le mélange avec les polyisocyanates (J) comportant au moins 2 groupes isocyanate par molécule, pour aboutir aux organopolysiloxanes (S) à fonction alcoxysilyle.

5. Mélange transformable en mousse (M) selon la revendication 1 ou 2, ou procédé selon la revendication 3 ou 4, dans lequel on utilise des organopolysiloxanes (S1) dont les groupes aminoalkyle ou hydroxyalkyle correspondent à la formule générale [3]
-O-(SiR⁵R⁶)-R⁷-Z [3]
où
**R⁵** représente un radical hydrocarboné en C₁-C₁₂ monovalent, éventuellement substitué par -CN ou halogène, dans lequel une ou plusieurs unités méthylène non contiguës peuvent être remplacées par des groupes -O- ou NR¹¹, ou un radical phényle éventuellement substitué par des radicaux alkyle en C₁-C₆, -CN ou halogène,
**R⁶** représente un atome d'hydrogène ou un radical **R⁵**,
**R⁷** représente un radical hydrocarboné en C₁-C₁₂ divalent, éventuellement substitué par cyano, alkyle, hydroxy, amino, aminoalkyle, hydroxyalkyle ou halogène, dans lequel une ou plusieurs unités méthylène non contiguës peuvent être remplacées par des groupes -O- ou NR¹²,
**R¹¹**, **R¹²** représentent un atome d'hydrogène ou un radical alkyle, cycloalkyle, alcényle ou aryle ayant 1-20 atomes de carbone et
**Z** représente un groupe OH ou NH₂.

6. Mélange transformable en mousse (M) selon la revendication 1 ou 2, dans lequel l'agent d'expansion (T) est un agent d'expansion physique, qui est choisi parmi des gaz comprimés sous pression en liquides et des liquides qui se vaporisent sous 0,10 MPa (abs.) et à des températures < 70°C.

7. Mousses, pouvant être produites à partir des mélanges transformables en mousse selon la revendication 1, 2, 5 ou 6.
